# EUROPEAN PATENT APPLICATION

(11) **EP 4 190 440 A1**
(43) Date of publication of application: **07.06.2023**
(21) Application number: 21849202.3
(22) Date of filing: 12.07.2021
(51) Int. Cl.: B01J 19/10, B05B 17/06

(54) **INTENSIFIED MULTIFREQUENCY SONOREACTOR DEVICE**

(30) Priority: 30.07.2020 ES 202030807
(71) Applicant: Universidad De Alicante, 03690 San Vicente del Raspeig (ES)
(72) Inventor: NAVARRO BRULL, Francisco Jose, 03690 SAN VICENTE DEL RASPEIG (ES); GOMEZ TORREGROSA, Roberto, 03690 SAN VICENTE DEL RASPEIG (ES)
(74) Representative: Temiño Ceniceros, Ignacio
(86) International application number: PCT/ES2021/070507
(87) International publication number: WO 2022/023597

(57) **Abstract**

Disclosed is an intensified multifrequency sonoreactor device, which is a scalable device comprising at least one transducer at at least one of the ends thereof, the transducer generating vibrations and uniformly distributing the acoustic field on a tubular reactor or conduit through which a reagent circulates and which is disposed on the lateral surface of a sonotrode, a special feature of the device being that the sonotrode is cylindrical, may be hollow or solid and is connected to the transducer by means of a mechanical coupler. According to the invention, the device comprises a control system connected to the transducer, the system comprising a signal-generating module and an amplifier that works at multifrequency and which is used to convert the energy from an electrical source, modify the frequency and amplify the signal on the transducer by combining and applying infrasound frequencies, audible sound frequencies and ultrasound frequencies to the sonotrode.

## Description

### FIELD OF THE INVENTION

The invention consists of a device comprising a tubular sonotrode which homogenizes the acoustic field generated along the sonotrode on at least one tubular reactor or a conduit through which a reactive or non-reactive liquid mixture circulates, wherein the conduit is disposed on said sonotrode.

The field of application of the present invention is the industrial sector related to reactors applied mainly in fine chemistry and in sonochemistry, so that the invention is intended to enable continuous work in chemical or physical processes (crystallization) allowing the handling of solids in suspension and/or the improvement of heterogeneous (gas-liquid-solid) processes in tubular reactors or conduits with variable diameter and length with optimal temperature control.

### BACKGROUND OF THE INVENTION

Flow chemistry allows the advantages of process intensification and continuous production to be obtained. However, miniaturized processes involving gases, liquids, and solids face two main drawbacks: the poor distribution of the multiphase flow and the obstruction of capillary reactors, something that is disclosed, for example, in:
*https:*//*rua.ua.es*/*dspace*/*bitstream*/*10045*/*90920*/*1*/*tesis_francisco_jose_navarro_brull.pdf].*

Power ultrasound is known to be capable of reducing dispersion and improving the flow of gases and liquids in tubular packed bed particulate reactors.

In the case of capillary reactors, the application of ultrasounds is known to allow the handling of a high concentration of suspended solids, avoiding obstructions therein.

Power ultrasound is also known to generally be used in two ways: through ultrasonic baths (indirect transmission of acoustic power) or by means of direct contact of the medium with sonotrodes attached to power ultrasound horns or transducers.

Ultrasonic probes operating at their resonant frequency generate standing waves that show periodic nodes and antinodes at distances established by the wavelength, which means that the system does not vibrate uniformly at all its points. In this sense, and in order to solve this technical limitation, the disclosure made in document ES2715659 is known, said document describing a helical capillary acoustic reactor which is used to distribute the patterns of the standing waves created along the sonotrode. However, the industrial uses of helical sonotrodes in the ultrasonic range present a series of operational drawbacks imposed by the very physics of vibration propagation; specifically, the following problems exist:
in the conversion of longitudinal displacements into radial and torsional displacements achieved by the helical probe, which also disperses the power transmitted to the medium by generating new combinations of vibration modes and frequencies;
in the maximum vibration transmitted by helical probes, since it is inevitably lower when presenting a greater number of resonant frequencies (or peaks);
by reducing the maximum power emitted by helical probes along the capillary reactor, applications that present greater attenuation, such as those with a larger conduit diameter or tube thickness, less rigid materials and/or mixtures or dispersions with more viscous or compressible fluids, are limited by these dispersion effects in the helical probe;
in an increase in power (or voltage) to counteract said drawbacks that would generate problems of high energy consumption, temperature increase, and/or fatigue located at various points of the helical probe, which could compromise the durability of the equipment;
in the use of vibration frequencies in the ultrasonic range which aggravates the problem of dispersion, attenuation and fatigue, especially for designs which require longer reaction lengths and involve a larger sonotrode diameter;
in addition to problems regarding the manufacture, machining and maintenance of helical sonotrodes with a larger diameter or scale with warped elements, which present a problem in terms of their complex structure, requiring solutions that can also be considered simpler.

Taking into account both the known background and the problems mentioned above, it is considered that there continues to be a need for a tubular reactor or conduit which is readily scalable for long reaction lengths, vibrates uniformly at high power, and further allows temperature control.

### BRIEF EXPLANATION OF THE INVENTION

The device object of the present invention allows the sonication of conduits, tubular and capillary reactors of larger diameters and long reaction lengths (and residence times) with minimal floor space and simplifying the operation and manufacturing processes.

The uniform distribution of the acoustic field is achieved by means of vibrations generated by at least one transducer that can work at various frequency ranges (combining infrasound frequencies, audible sound frequencies and/or ultrasound frequencies from 20 kHz to 120 kHz, for example) and vibration modes, without the need for helical sonotrode geometries that have the drawback of dispersing acoustic power. The efficiency of the device is that it allows operation at low power, with mechanical benefits such as the elimination of obstructions by vibratory action; or with high power ultrasound, with the benefits of cavitation, mechanical agitation, partial fluidization of fixed bed reactors and sonochemistry.

Acoustic energy can be applied in a continuous or pulsed manner throughout the reaction medium (fluid inside the tube), improving the transport of matter and the mixing of multiphase systems (heterogeneous reactors with liquid-gas-solid interfaces such as packed bed reactors) and/or reducing the limitations of handling solids in flow (intentionally prepared suspensions, reaction products or solid by-products), avoiding clogging of the conduit for mixtures in oscillating and/or continuous flow.

At least one transducer makes it possible to emit/receive various frequencies on the probe and the reactor. Depending on the frequency and vibration power required, the actuators can be electromagnetic (motors that convert electrical energy into mechanical energy), electroacoustic (speaker type) transducers and/or piezoelectric (Langevin type) transducers. The symmetrical design of the device allows the correct distribution of the acoustic field, without the dispersion produced by the geometry of helical sonotrodes, reducing material damage due to fatigue, as well as energy recovery if several transducers are added, since, for example, one transducer can act as an emitter and the other as a receiver, alternately.

The isolation of the sonotrode from the reaction media, that is, the material of the tubular conduit through which the reagent circulates, allows the use of various materials, such as glass, e.g. borosilicate; or metallic materials such as stainless steel or copper; or inert polymeric materials such as polytetrafluoroethylene (PTFE), perfluoroethylene/propylene (FEP), perfluoroalkoxyalkanes (PFA), perfluoroalkoxyalkanes (MFA), polyvinyl fluoride (PVF) or polyetheretherketone (PEEK). Obtaining peaks of a greater amplitude of the present invention allows the use of less rigid conduit materials, with greater thickness, larger diameter or the application of tube-in-tube arrangements with more viscous and/or compressible fluids or mixtures.

The higher surface/volume ratio of the sonotrode allows for improved temperature control using heat tubes in secondary turns in contact with the sonotrode (conduit) or additional mechanisms (exchange liquids or gases by means of forced convection or by radiation). The interior hollow space can be used for the circulation of air or cooling fluid.

The separation between the transducers and the sonicated medium minimizes heat gains at low and high power, using cross-sectional changes to amplify the emitted acoustic power.

Therefore, the intensified multifrequency tubular sonoreactor presents a series of unique advantages that cannot be obtained with any of the known configurations and surpasses, for example, complex configurations, such as helical configurations. This configuration allows to obtain the advantages of the use of several frequencies (infrasound, audible sound and ultrasound frequencies), generating an optimal combination of antinodes for the resonant frequencies of the assembly without the conversion and dispersion of longitudinal displacements into radial and/or torsional modes generated, for example, by helical probes or others with more complex geometries. The maximum vibration and power transmitted by probes with a simplified geometry is greater as they present a lower number of resonant frequencies, modes and peaks; by increasing the amplitude of vibration received along the tubular reactor or conduit, the present assembly allows industrial applications characterized by greater attenuation, such as: larger diameter of the conduit, greater thickness or rigidity of the tube, tube-in-tube arrangements, and the sonication of fluids or heterogeneous solid-liquid-gas mixtures that are more viscous and/or compressible. An increase in power with the same voltage (higher efficiency) would generate fewer problems of increased temperature and fatigue. In any case, the use of simple geometries allows the prediction and exact locating of the behavior of the sonotrode, which makes it possible to reinforce the equipment and increase its durability The use of vibration frequencies in the range of audible sounds and infrasounds reduces dispersion, attenuation and fatigue problems, especially for designs which require longer reaction lengths and involve a larger sonotrode diameter. The manufacture, machining and maintenance of larger scale or diameter sonotrodes without warped or complex elements, therefore, present a substantial improvement compared to previous solutions.

It should be noted that, throughout the description and claims, the term "comprises" and the variants thereof are not intended to exclude other technical features or additional elements.

### BRIEF EXPLANATION OF THE FIGURES

In order to complete the description and to help a better understanding of the features of the invention, a set of figures and drawings is presented in which the following is represented by way of illustration and not limitation:
Figure 1 shows a free perspective and sectional view of the device object of the present invention with an acoustic design and machining for housing a tubular reactor or conduit which vibrates at various frequencies.
Figure 2 shows free perspective and sectional views of the assembly (without a housed tubular conduit) which vibrates at various frequencies, generating a characteristic combination of nodes and antinodes for the different resonance peaks of the assembly.
Figure 3 shows details and an example of the dispersion problems in helical probes, which redistribute the resonance peaks by reducing the lateral amplitude (u [µm]), reducing power and acoustic efficiency.
Figure 4 shows a free perspective and sectional view of the assembly (without a tubular conduit) where the coupler and sonotrode have been scaled longitudinally, with a longer length, maintaining diameter and thickness.
Figure 5 shows free perspective and sectional views of the assembly (without a tubular conduit) where the coupler and sonotrode have been scaled diametrically, that is, with a larger diameter, maintaining the length and reducing the thickness of the wall of the sonotrode.
Figure 6 shows free perspective and sectional views of a diametrically scaled tubular reactor where the patterns of vibration nodes and antinodes generated at two nearby resonant frequencies are shown.
Figure 7 shows a free perspective and sectional view of the design (without a tubular conduit) where the vibrations generated at ultrasonic frequencies and audible frequencies are compared.
Figure 8 shows a free perspective and sectional view of the assembly where the coupler and sonotrode have been scaled longitudinally, having slits in their geometry to guide the acoustic vibrations generated by the transducers.
Figure 9 shows free perspective views without a tubular reactor of the same design with a single transducer vibrating at three resonant frequencies and generating vibrations in various areas of interest.

### DETAILED DESCRIPTION OF SEVERAL EMBODIMENTS OF THE INVENTION

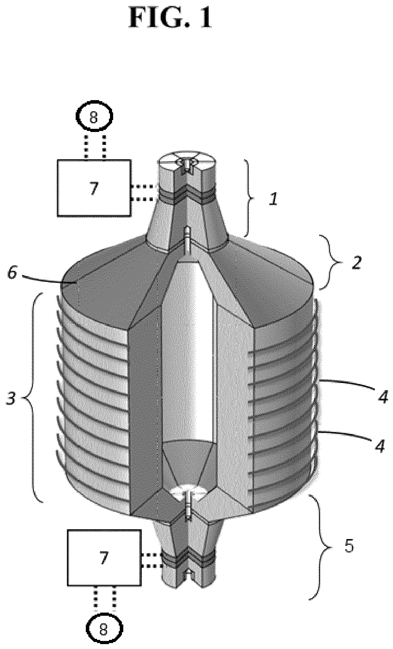

The sonoreactor device object of the present invention, as can be seen in Figure 1, is a device which comprises a transducer (1) at one of its ends, which, by means of a mechanical coupler (2), generates vibrations at various frequencies in a tubular reactor (4) or conduit which is the conduit through which the reagent or mixture circulates and which, as has been mentioned, can be tubular or capillary, which tubular reactor (4) or conduit is disposed on the surface of a cylindrical sonotrode (3), specifically it is housed in a machining carried out for this purpose on the lateral surface of the sonotrode, so that the device uniformly sonicates the tubular reactor (4) or conduit disposed on the lateral surface of the cylinder and increases acoustic efficiency.

The sonoreactor may comprise more than one transducer. The mechanical energy can be recovered if a second transducer (5) is added on the opposite side of the device, which can also act at different frequencies alternately. The sonotrode (3) can have slits (6) or grooves along its surface that make it possible to obtain a better distribution of vibrations at high frequencies.

Additionally, as can be seen, the transducers (1, 5) are connected to a control system or module (7) that has the particularity of comprising a signal-generating module and an amplifier that works at multifrequency and which is used to convert the energy from an electrical source (8), modify the frequency and amplify the signal, in such a way that the transducer causes the sonotrode to vibrate in resonance.

Moreover, as previously mentioned, the sonotrode (3) is cylindrical, and preferably hollow rather than solid, and it can be both ways, it being better that it be hollow since there is a larger surface area for cooling the assembly, and allows the circulation of air or cooling fluid inside the hollow part of the cylinder, making it possible to regulate the temperature of the assembly.

In addition, at a physical level, the probe must maintain a dimension (diameter) transverse to the direction of propagation of the wave that is not greater than 1/3 of the wavelength, for which the invention may comprise slits (6) on the surface of the sonotrode.

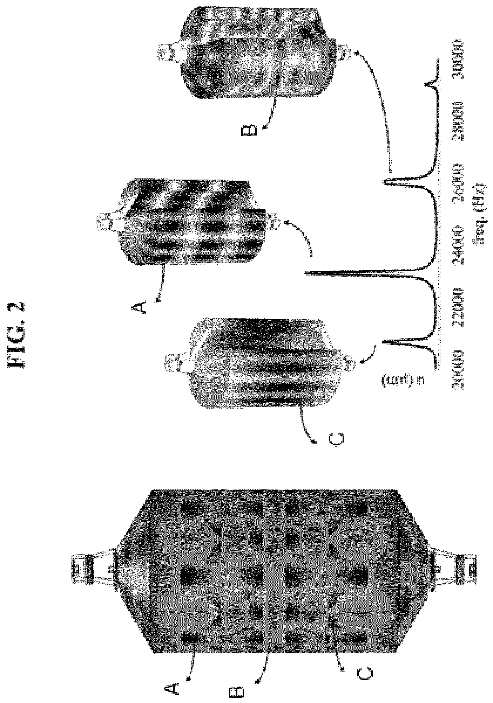

In Figure 2 it can be seen that the device object of the present invention can, compared to other known devices, work at various resonant frequencies (A, B, C) alternately to homogenize the displacement on the lateral surface (u [µm]) of the sonotrode (3) which houses the tubular reactor (4) or conduit. Specifically, in this figure it can be seen that a sonotrode (3) can vibrate at various frequencies, generating a combination of nodes and antinodes in the resonance peaks of the assembly. The shaded areas indicate greater displacement on the lateral surface on which the tubular reactor (4) is housed.

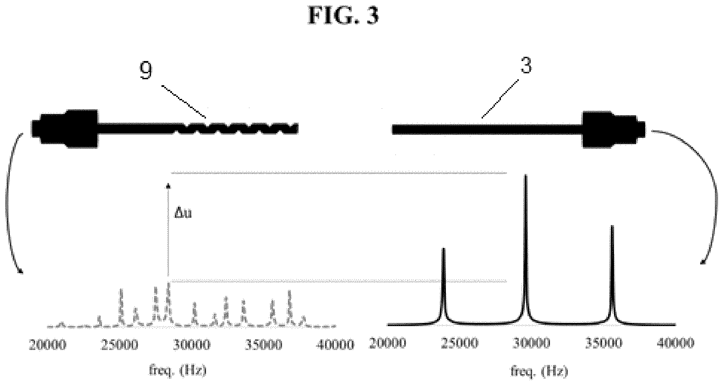

Figure 3 shows a comparison between the operation of a device based on a helical probe (9) and a device as defined in the present invention which comprises a cylindrical sonotrode (3). As can be seen, a helical probe (9) requires warped geometries that do not facilitate simple scaling when prolonged reaction lengths or higher acoustic powers are required. Instead of distributing the nodes and antinodes as the helical probe does, the present invention makes it possible to use the main resonance peaks and amplify the received acoustic power.

Helical probes (9) transform longitudinal vibrations into radial and torsional vibrations, dispersing and redistributing resonance peaks, reducing the effective lateral amplitude (u [µm]) of the probe. Faced with this, the present invention allows the transmitted acoustic power to be amplified to larger scales since the geometry of the sonotrode (3) is symmetrical.

In this sense, the helical probe distributes the patterns of the standing waves created along the sonotrode in a different way than those generated by the cylindrical sonotrode. Displacement distribution is improved even with low-frequency ultrasound of 28 kHz. Therefore, the advantages of a cylindrical sonotrode compared to a helical probe or one with a complex shape is that, in addition to allowing the regulation of the vibration in different parts of same, it allows floor space to be reduced with simple geometric shapes (helical probe must be twisted on itself), maintaining the necessary length of tubular reactor or conduit.

This makes it possible to see that the present invention, which includes a cylindrical sonotrode with a symmetrical configuration, overcomes the dispersion problems present in helical probes, since for the same voltage they redistribute the resonance peaks, reducing the lateral amplitude (u [µm ]) by reducing the power and acoustic efficiency thereof.

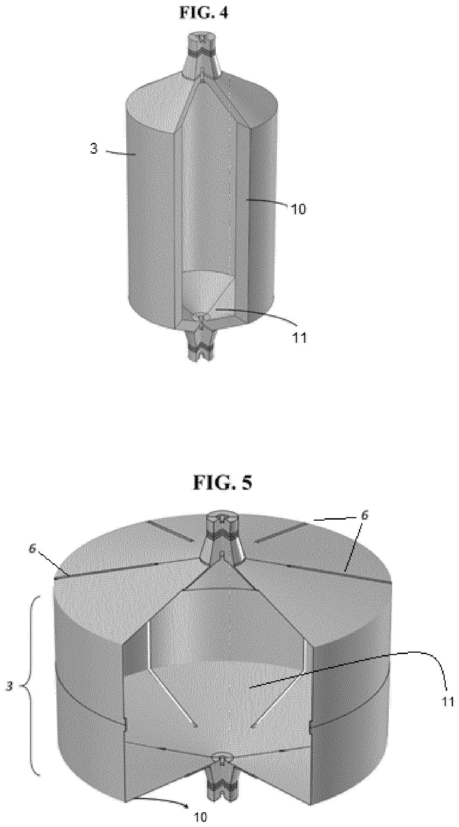

In Figure 4 it can be seen that the sonotrode (3) and the couplers can have different thicknesses (10), leaving an internal cavity (11), and have slits (6) or simple surface grooves that help distribute the acoustic field without dispersing the peaks at the different resonant frequencies. In Figure 5 a sonoreactor that is scaled in a different way can be seen. Therefore, taking into account Figures 4 and 5, the present invention, compared to other known typologies, allows various types of scaling to accommodate a longer tubular (reaction) conduit or reactor, for example, increasing the diameter of the sonotrode (Figure 5), maintaining its length and reducing its thickness. As previously mentioned, the fact that the sonotrode (3) is hollow causes an internal cavity (11) to be generated that includes a circulation of air or cooling fluid which is used to regulate the temperature of the assembly.

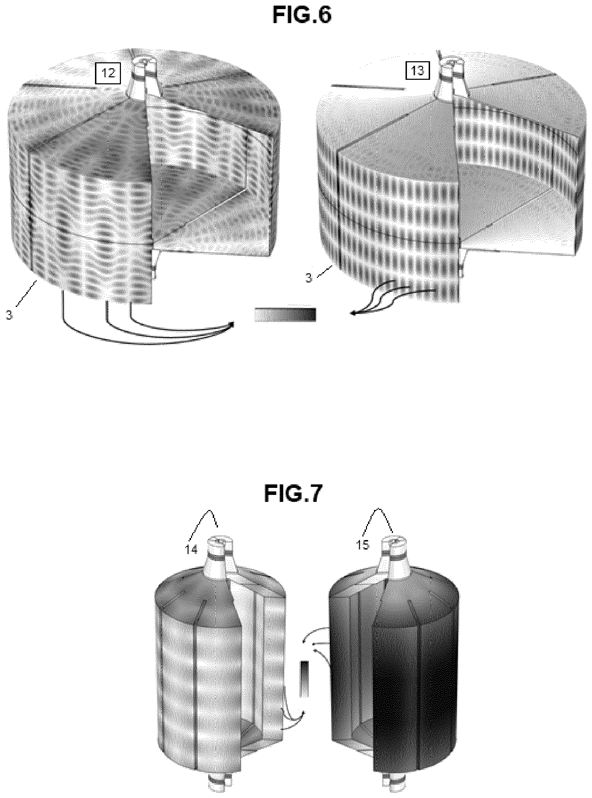

The patterns generated by a design that is excited at two nearby resonant frequencies are shown in Figure 6, where the nodes (12) and antinodes (13) are indicated with a gray scale, and where the variations according to their arrangement along the entire surface of the sonotrode (3) are noted. It can be seen that this invention is versatile, working at multifrequency and being able to be scaled as required by each tubular reactor.

Another one of the technical advantages of the present invention compared to other known ones is that the transducers can generate vibration modes at lower infrasound frequencies or audible sound frequencies, being able to homogenize the action on the lateral surface and increasing acoustic efficiency. Figure 7 illustrates the same design that compares the vibration modes generated at frequencies of 24 kHz in the ultrasonic range (14) with audible sound frequencies of 855 Hz (15). Shaded areas indicate increased displacement with an order of magnitude increase in lateral displacement.

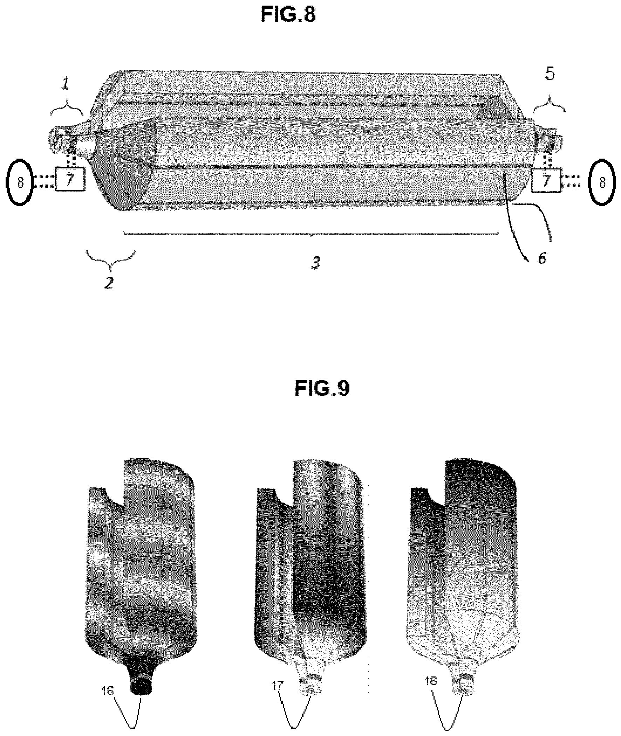

Lower vibration frequencies, including infrasound frequencies and audible sound frequencies, allow greater efficiency and scaling, respecting the general structure of the invention where the length of the sonotrode (3) can be extended as illustrated in Figure 8, maintaining the same general structure described above.

The ends of the sonotrode can be machined and used to house nozzles or tees to prevent obstructions or increase acoustic intensification from upstream to downstream of the reactor system. The interior and/or exterior surface of the sonotrode can accommodate secondary conduits for the removal or supply of heat by means of fluids with natural or forced convection (for example, a cooling bath inside the cavity generated). A simplified design is illustrated in Figure 9, where with only one transducer, the sonotrode (3) can be vibrated in three ranges, ultrasonic frequency (16), audible frequency (17) and infrasound frequency (18).

In an embodiment of the device object of the present invention, all the elements included in the device are coupled in series. This allows the present invention to obtain another advantage over known solutions, since this allows different devices or systems to be attached in series, connecting an end transducer of one device with the transducer of another device, which makes it possible to obtain the possible scaling option according to what is known as element duplication scaling or numbering-up.

Therefore, the intensified multifrequency tubular sonoreactor is a scalable device which allows the uniform distribution of the acoustic field by means of vibrations generated by at least one transducer that can work in various frequency ranges (combining infrasound, sound and/or ultrasound from 20 kHz to 120 kHz, for example) and vibration modes, without the need for complex sonotrode geometries (such as helical geometries) which disperse acoustic power and are therefore not suitable for multifrequency work (the control must deal with a larger number of frequency peaks of a smaller amplitude and more difficult to predict). Another advantage that is observed and has been previously indicated is that the present invention, compared to other known ones, for example, the helical one, allows the diameter of the tubular reactor or conduit through which the (reactive or non-reactive) mixture circulates to be of large dimensions, or at least larger than those allowed to date. An increase in the diameter of the conduit and the probe allows a more efficient scaling (smaller floor size with simpler geometries). Such scaling has a helical configuration which could only be done by coiling on itself; however, with the present invention the scaling can also be done by the element duplication scaling option (numbering-up rather than scale-up).

## Claims

1. An intensified multifrequency sonoreactor device, which device comprises at least one transducer (1, 5) at at least one of the ends thereof, which generates vibrations and uniformly distributes the acoustic field on a tubular reactor (4) or conduit through which a reagent or mixture circulates and which is disposed on the surface of a sonotrode (3), and which is **characterized in that**:
the sonotrode (3) is cylindrical and is connected to the transducer (1, 5) by means of a mechanical coupler (2);
wherein the tubular reactor (4) is housed in a machining carried out on the lateral surface of the cylinder; and
wherein the transducer (1, 5) is connected to a control module (7) comprising a signal-generating module and an amplifier that works at multifrequency which is used to convert the energy from an electrical source (8), modify the frequency and amplify the signal on the transducer (1, 5) by combining and applying different frequencies to the sonotrode (3).

2. The intensified multifrequency sonoreactor device according to claim 1, wherein the sonotrode (3) is a hollow cylinder with an internal cavity (11).

3. The intensified multifrequency sonoreactor device according to claim 2, wherein the cavity (11) of the hollow cylinder comprises a circulation of air or cooling fluid.

4. The intensified multifrequency sonoreactor device according to claim 1, wherein the sonotrode (3) has slits (6) or grooves along its lateral surface.

5. The intensified multifrequency sonoreactor device according to claim 1, wherein the sonotrode (3) is a solid cylinder.

6. The intensified multifrequency sonoreactor device according to claim 1, wherein the elements comprised in the device are coupled in series.

7. The intensified multifrequency sonoreactor device according to claim 1, wherein the transducer (1, 5) combines and applies in the sonotrode (3) infrasound frequencies, audible sound frequencies and/or ultrasound frequencies.

8. An ultrasonic capillary reactor according to any of the preceding claims, wherein the tubular reactor (4) which is disposed on the sonotrode (3) is made of glass.

9. The ultrasonic capillary reactor according to any of claims 1 to 7, wherein the tubular reactor (4) which is disposed on the sonotrode (3) is made of an inert polymer.

10. The ultrasonic capillary reactor according to any of claims 1 to 7, wherein the tubular reactor (4) which is disposed on the sonotrode (3) is made of a metallic material.

11. The ultrasonic capillary reactor according to any of claims 1 to 7, wherein the tubular reactor (4) which is disposed on the sonotrode (3) is made of a ceramic material.
